# EUROPEAN PATENT SPECIFICATION

(11) **EP 2 714 350 B1**
(45) Date of publication and mention of the grant of the patent: **31.01.2018**
(21) Application number: 12788845.1
(22) Date of filing: 25.05.2012
(51) Int. Cl.: B05D 7/06, B05D 1/12

(54) **METHODS OF POWDER COATING AND ITEMS TO BE POWDER COATED**
PULVERBESCHICHTUNGSVERFAHREN UND ELEMENTE ZUR PULVERBESCHICHTUNG
PROCÉDÉS DE REVÊTEMENT DE POUDRE ET ÉLÉMENTS À ENDUIRE DE POUDRE

(30) Priority: 25.05.2011 CN 201120169679 U; 25.05.2011 CN 201110136763; 30.11.2011 WO PCT/CN2011/083252
(43) Date of publication of application: 09.04.2014
(73) Proprietor: SuperL Technology Limited, Kowloon, Hong Kong (CN)
(72) Inventor: HUNG, Kim Yung, Hong Kong (CN); WONG, Wai Suen, Hong Kong (CN)
(74) Representative: inCompass IP Europe Limited
(86) International application number: PCT/CN2012/076075
(87) International publication number: WO 2012/159583

(56) References cited:
- EP-A1- 0 457 038
- EP-A1- 1 468 805
- CN-A- 1 293 598
- CN-A- 1 500 841
- CN-U- 202 123 558
- DE-A1- 2 361 434
- GB-A- 1 489 814
- JP-A- 9 066 674
- US-A1- 2002 056 938
- US-A1- 2007 231 580
- US-B1- 6 296 939

## Description

### Technical Field

The present invention relates to methods of powder coating heat-sensitive items, and in particular, items made of wood-based materials.

### Background Art

The process of powder coating metal items by spraying a coating of powder onto the items and then heating the coating of powder to cure the coating has been used for about 50 years. The process involves spraying a coating of powder onto an item, heating or baking the coating of powder to 200°C so that the powder melts, flows and then bonds to the item. Advantages of the process include that no solvents are necessary, no harmful substances are discharged during the process, and the powders used do not contain heavy metals and are non-toxic. Thus, the powder coating process is environmentally-friendly and relatively safe.

The powder coating process has been applied to synthetic board since the end of the 1990s. Synthetic board includes synthetic wood or engineered wood board, such as fiberboard, particleboard, chipboard, medium density fiberboard (MDF), and hardboard. In particular, a synthetic board (composite board) is a board or molded piece that is formed by using timber or other non-timber plants as a raw material, mechanically processing and separating the raw material into various unit materials, and then gluing the unit materials and other additives together by use of or without use of a glue. Synthetic boards are mainly categorized into plywoods, shaving boards, medium density fiberboards (MDF) and so on. In order to endow synthetic boards with a higher surface strength, a longer service life, or a more aesthetic appearance, paint spraying or powder coating is usually carried out on surfaces of the synthetic boards.

However, although the powder coating process, with the high temperature baking required, is excellent when applied to metal, there are many problems when it is applied to synthetic board and other heat-sensitive items. One as yet unresolved problem with items made of these types of materials is the cracking and distortion that results from high temperature baking. One particular aspect of this problem is edge cracking. This occurs, for example, around the edges of a board being powder coated.

More particularly, the lateral side surfaces (edges) of a synthetic board sprayed with powder tend to crack when being baked in a high-temperature furnace and after being discharged from the furnace because of density differences in the cross-section of the synthetic board. Specifically, the upper surface and the lower surface of the board have a greater density, while the lateral middle portion has a smaller density. Generally, the density of the lateral middle portion of the board is only a half of that of the upper surface and the lower surface. Consequently, when the board sprayed with powder is baked in the high-temperature furnace, the upper and the lower surfaces and the lateral sides (edges) of the board will expand with heat and contract with cold to different extents. Specifically, the upper and the lower surfaces of the board have a consistent density which is greater, so no cracks will be caused therein; but in contrast, the lateral sides of the board have a smaller density, so cracks tend to be caused at the lateral sides due to evaporation of moisture from inside of the board at the high temperature. Moreover, as the moisture inside the board evaporates continuously, the cracks will spread from the lateral sides to the inside of the board to seriously affect the spraying effect.

### Disclosure of Invention

### Technical Problem

It is an object of the present invention to overcome or ameliorate at least one of the disadvantages of the prior art, or to provide a useful alternative.

### Solution to Problem

### Technical Solution

The present invention, in the first aspect, provides a method of powder coating a heat-sensitive item having an edge, the method including:

sealing the edge against moisture loss from the item;

applying powder to a surface of the item;

heating the surface in a melting stage for between about 60 seconds and about 90 seconds such that the surface has a surface temperature that reaches a maximum that is above a curing temperature to melt the powder; and

heating the surface in a curing stage to maintain the surface temperature at the curing temperature for between about 120 seconds and about 180 seconds to cure the powder.

Preferably, the edge is sealed by applying an edge strip to the edge. Preferably, the edge strip is bonded to the edge. Preferably, the edge strip is bonded to the edge by gluing the edge strip to the edge. In one embodiment, the edge strip and the glue are heated after gluing the edge strip to the edge. The edge strip and the glue are preferably heated at a temperature between about 80°C and about 220°C.

Preferably, the glue is a hotmelt adhesive. Preferably, the glue is a hotmelt adhesive that reacts with moisture to increase the bond strength between the item and the edge strip.

Preferably, the edge strip is made of one or more of paper, melamine paper, and kraft paper.

Preferably, the powder has a rated curing temperature of between about 120°C and about 150°C. In one embodiment, the powder has a rated curing temperature of about 150°C.

In one embodiment, the surface temperature reaches a maximum of between about 155°C and about 175°C in the melting stage. Preferably, the surface temperature reaches a maximum of between about 160°C and about 170°C in the melting stage.

In one embodiment, the curing temperature is between about 130°C and about 160°C. Preferably, the curing temperature is between about 140°C and about 150°C.

Preferably, the item has a relative humidity of between about 5% to about 7% before the powder is applied to the surface of the item.

Preferably, the item is preheated such that the item has a relative humidity of between about 5% to about 7%. Preferably, the item is preheated to a temperature of between about 60°C and about 120°C for about 90 seconds.

In one embodiment, the item has a relative humidity of between about 6% and about 8% before preheating.

In one embodiment, the item has a temperature of about 25°C before preheating.

Preferably, the item has a temperature of between about 40°C and about 55°C before the powder is applied to the surface of the item.

Preferably, the item is heated by moving the item through a heating oven having a melting zone corresponding to the melting stage and a curing zone corresponding to the curing stage.

Preferably, the item is heated using infrared radiation.

In one embodiment, the infrared radiation is supplied by an infrared radiation source producing an average power distribution of about 25kW/m² during the melting stage.

In one embodiment, the infrared radiation is supplied by an infrared radiation source producing an average power distribution of about 10kW/m² during the curing stage.

Preferably, the infrared radiation source includes one or more infrared lamps spaced apart over an area to produce the average power distribution.

Preferably, the surface is the entire outer surface of the item. Preferably, the cured powder has a hardness of at least 2H.

Preferably, the board is made of wood or wood-based material. In one embodiment, the item is made of engineered wood. In another embodiment, the item is made of one or more of fiberboard, particleboard, chipboard, medium density fiberboard, and hardboard.

In one embodiment, the item is made of medium density fiberboard and the powder forms a coating having a thickness of between about 80 micrometres and about 90 micrometres. Preferably, the method is used a second time to form a second coating having a thickness of between about 60 micrometres and about 70 micrometres. Preferably, one or both of the first and second coatings is sanded, and the overall thickness of the first and second coatings is between about 100 micrometres and about 140 micrometres.

In another embodiment, the item is made of melamine faced chipboard and the powder forms a coating having a thickness of between about 80 micrometres and about 100 micrometres.

In the second aspect, the present invention provides a method of powder coating a heat-sensitive item, the method including:
applying a powder to a surface of the item;
heating the surface in a melting stage for between about 60 seconds and about 90 seconds such that the surface has a surface temperature that reaches a maximum that is above a curing temperature to melt the powder; and
heating the surface in a curing stage to maintain the surface temperature at the curing temperature for between about 120 seconds and about 180 seconds to cure the powder.

Preferably, the powder has a rated curing temperature of between about 120°C and about 150°C. In one embodiment, the powder has a rated curing temperature of about 150°C.

In one embodiment, the surface temperature reaches a maximum of between about 155°C and about 175°C in the melting stage. Preferably, the surface temperature reaches a maximum of between about 160°C and about 170°C in the melting stage.

In one embodiment, the curing temperature is between about 130°C and about 160°C. Preferably, the curing temperature is between about 140°C and about 150°C.

Preferably, the item has a relative humidity of between about 5% to about 7% before the powder is applied to the surface of the item.

Preferably, the item is preheated such that the item has a relative humidity of between about 5% to about 7%. Preferably, the item is preheated to a temperature of between about 60°C and about 120°C for about 90 seconds.

In one embodiment, the item has a relative humidity of between about 6% and about 8% before preheating.

In one embodiment, the item has a temperature of about 25°C before preheating.

Preferably, the item has a temperature of between about 40°C and about 55°C before the powder is applied to the surface of the item.

Preferably, the item is heated by moving the item through a heating oven having a melting zone corresponding to the melting stage and a curing zone corresponding to the curing stage.

Preferably, the item is heated using infrared radiation.

In one embodiment, the infrared radiation is supplied by an infrared radiation source producing an average power distribution of about 25kW/m² during the melting stage.

In one embodiment, the infrared radiation is supplied by an infrared radiation source producing an average power distribution of about 10kW/m² during the curing stage.

Preferably, the infrared radiation source includes one or more infrared lamps spaced apart over an area to produce the average power distribution.

Preferably, the surface is the entire outer surface of the item. Preferably, the cured powder has a hardness of at least 2H.

In one embodiment, the item has an edge and the method includes sealing the edge against moisture loss from the item before applying powder to the surface of the item.

Preferably, the edge is sealed by applying an edge strip to the edge. Preferably, the edge strip is bonded to the edge. Preferably, the edge strip is bonded to the edge by gluing the edge strip to the edge. Preferably, the edge strip and the glue are blanched after gluing the edge strip to the edge. The edge strip and the glue are preferably blanched at a temperature between about 80°C and about 220°C.

Preferably, the glue is a hotmelt adhesive. Preferably, the glue is a hotmelt adhesive that reacts with moisture to increase the bond strength between the board and the edge strip.

Preferably, the edge strip is made of one or more of paper, melamine paper, and kraft paper.

Preferably, the item is made of wood or wood-based material. In one embodiment, the item is made of engineered wood. In another embodiment, the item is made of one or more of fiberboard, particleboard, chipboard, medium density fiberboard, and hardboard.

In one embodiment, the item is made of medium density fiberboard and the powder forms a coating having a thickness of between about 80 micrometres and about 90 micrometres. Preferably, the method is used a second time to form a second coating having a thickness of between about 60 micrometres and about 70 micrometres. Preferably, one or both of the first and second coatings is sanded, and the overall thickness of the first and second coatings is between about 100 micrometres and about 140 micrometres.

In another embodiment, the item is made of melamine faced chipboard and the powder forms a coating having a thickness of between about 80 micrometres and about 100 micrometres.

In the third aspect of the present invention, there is provided a heat-sensitive item to be powder coated, the heat-sensitive item having an edge sealed against moisture loss from the item.

Preferably, the edge has an edge strip. Preferably, the edge strip is bonded to the edge. Preferably, the edge strip is bonded to the edge with a glue. In one embodiment, the edge strip and the glue were heated. The edge strip and the glue were preferably heated at a temperature between about 80°C and about 220°C.

Preferably, the glue is a hotmelt adhesive. Preferably, the glue is a hotmelt adhesive that reacts with moisture to increase the bond strength between the item and the edge strip.

Preferably, the edge strip is made of one or more of paper, melamine paper, and kraft paper.

A synthetic board including a main board may be characterized in that the main board is covered by edge strips on edges (side surfaces) thereof, and the edge strips and other outer surfaces of the main board are all covered by a coating formed through powder coating (or "powder spraying").

Preferably, the edge strips are adhered to the edges of the main board through an adhesive.

Preferably, the glue is a hotmelt adhesive. Preferably, the glue is a hotmelt adhesive that reacts with moisture to increase the bond strength between the board and the edge strip.

In another embodiment, the adhesive is a hydrophobic adhesive that is able to withstand a high temperature.

In yet another embodiment, the adhesive is a glue that is able to withstand a high temperature, and the edge strips are adhered to the edges of the main board through a hot stamping process to expel the moisture from the glue. Preferably, the edge strips are adhered to the edges of the main board through a hot stamping process so that a location at which the edge strips are adhered to the edges of the main board has a temperature of 120 degrees to 220 degrees to expel the moisture from the glue.

In a further embodiment, the glue is a yellow adhesive whose main ingredient is a PVAC waterbase adhesive, or the glue is a T50 adhesive whose main ingredient is a PVAC waterbase adhesive.

Preferably, the shapes of the edge strips match with those of the edges of the main board.

Preferably, a powder curable at a low temperature is used in the coating, and a main ingredient of the powder is an epoxy resin and a polyester.

Preferably, the edge strips are made of a paper material that has a hardness and smooth surfaces. Preferably, the paper material has a density of 30 g/m² ∼ 300 g/m². Preferably, the edge strips have a thickness of 0.03 mm ∼ 3 mm. More preferably, the edge strips have a thickness of 0.03 mm ∼ 1 mm.

Preferably, the edge strips are made of melamine paper or kraft paper.

Preferably, the main board is one of a plywood, a shaving board and a medium density fiberboard (MDF).

### Advantageous Effects of Invention

### Advantageous Effects

In different embodiments, faces of the main board have a square shape, a polygonal shape, a circular shape, or some other irregular shape.

### Brief Description of Drawings

### Description of Drawings

Preferred embodiments in accordance with the best mode of the present invention will now be described, by way of example only, with reference to the accompanying figures, in which:

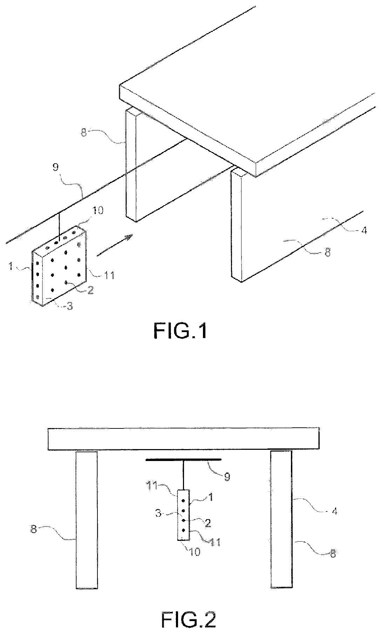

Fig. 1 is a perspective view of an oven used in a powder coating process in accordance with a preferred embodiment of the present invention, where the oven is for heating an item that has been coated with powder;
Fig. 2 is an end view of the oven of Fig. 1;

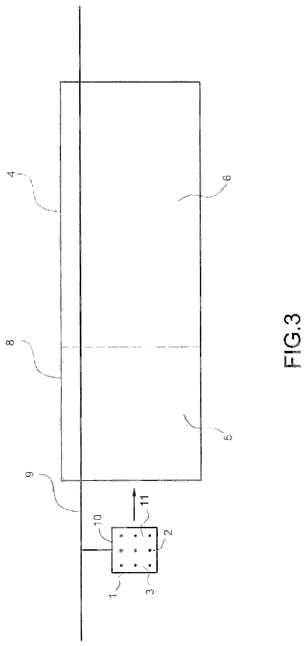

Fig. 3 is a cross-sectional side view of the oven of Fig. 1;

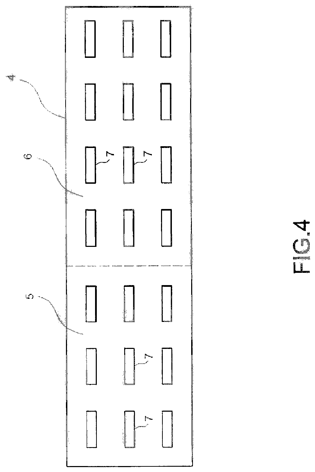

Fig. 4 is a cross-sectional side view of the oven of Fig. 1 showing a wall inside the oven fitted with infrared tubes to form an infrared radiation source;

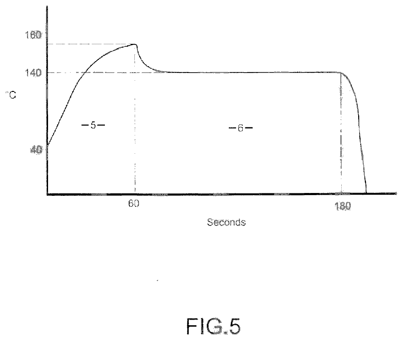

Fig. 5 is a graph showing the surface temperature of the item as the item proceeds through the oven;

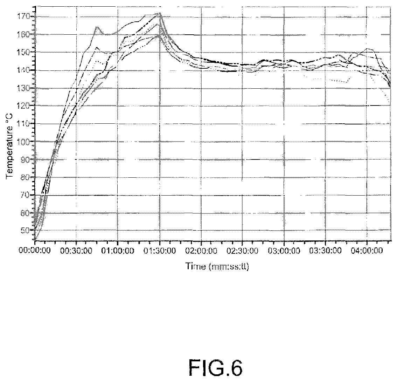

Fig. 6 is another graph showing the surface temperature of the item as the item proceeds through the oven;

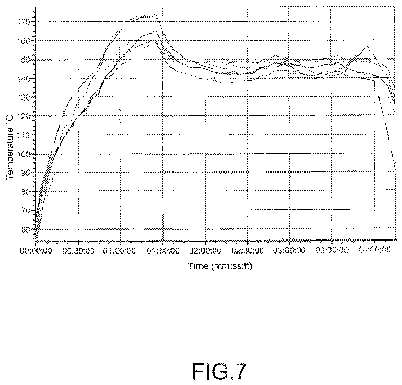

Fig. 7 is a further graph showing the surface temperature of the item as the item proceeds through the oven;

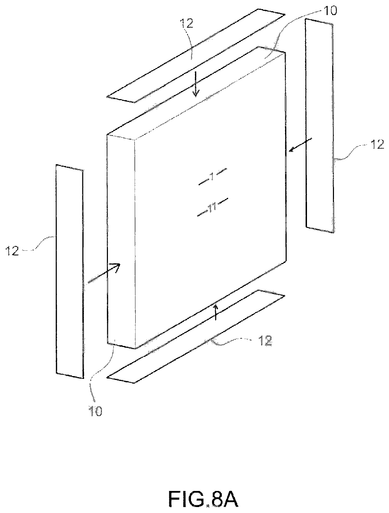

Fig. 8a is a perspective view of an item to be powder coated in a powder coating process in accordance with a preferred embodiment of the present invention, shown before edge strips are bonded to the edges of the item;
Fig.8b is a plan view of the item of Fig. 8b;
Fig. 9 is a plan view of the item of Fig.8, shown after the edge strips have been bonded to the edges of the item using a glue; and
Figs. 10a to 10d are sequential perspective views of an item to be powder coated in a powder coating process in accordance with another preferred embodiment of the present invention.

### Mode for the Invention

### Mode for Invention

Referring to the figures, there is depicted a method of powder coating a heat-sensitive item 1. The method includes applying a powder 2 to a surface 3 of the item 1, heating the surface 3 in a melting stage for between about 60 seconds and about 90 seconds such that the surface 3 has a surface temperature that reaches a maximum that is above a curing temperature to melt the powder 2, and heating the surface 3 in a curing stage to maintain the surface temperature at the curing temperature for between about 120 seconds and about 180 seconds to cure the powder 2.

The powder 2 can be any suitable low temperature powder. Such a powder typically has a rated curing temperature of between about 120°C and about 150°C. One particular powder that has been applied quite successfully has a rated curing temperature of about 150°C.

It is preferred that in the melting stage, the surface 3 is heated for between about 60 seconds and about 90 seconds such that the surface 3 has a surface temperature that reaches a maximum of between about 155°C and about 175°C to melt the powder 2. More preferably, the surface 3 is heated in the melting stage for between about 60 seconds and about 90 seconds such that the surface 3 has a surface temperature that reaches a maximum of between about 160°C and about 170°C to melt the powder 2.

It is preferred that the curing temperature is between about 130°C and about 160°C. More preferably, the curing temperature is between about 140°C and about 150°C.

Throughout the present specification, a "heat-sensitive item" means an item which is affected by the heating required in traditional powder coating processes in such a way that the item contains defects, such as cracking, distortion, bubbling, surface unevenness, and structural weakening, that detract from the quality, aesthetics, and performance of the item.

Depending on the colour of the powder 2, the amount of time the item 1 spends in the melting stage and the curing stage can be adjusted. This is because different colours absorb heat energy at different rates and adjusting the time the item 1 spends in the melting and curing stages ensures that similar heat energies are absorbed by powders of different colour. For example, it has been found that black coloured powder requires shorter times, white coloured powder requires longer times, and yellow coloured powder requires even longer times.

The heating can be carried out by moving the item 1 through a heating oven 4 having a melting zone 5 corresponding to the melting stage and a curing zone 6 corresponding to the curing stage. In the present embodiment, infrared radiation is used to heat the item 1. However, other methods such as using ultraviolet radiation, radiant heat, and convective heat can be employed in other embodiments.

In one embodiment, the infrared radiation is supplied by an infrared radiation source producing an average power distribution of about 25kW/m² during the melting stage. In another embodiment, the infrared radiation is supplied by an infrared radiation source producing an average power distribution of about 10kW/m² during the curing stage. These average power distributions can be produced by having the infrared radiation source include one or more infrared lamps 7 spaced apart over an area.

In the present embodiment, the heating oven 4 includes two opposing walls 8 between which the item 1 moves. Each wall 8 includes a plurality of infrared lamps 7 distributed over an area of the wall to produce the desired average power distribution. For example, 25 infrared lamps each rated at 10kW can be evenly distributed over an area of one of the walls 8 measuring 5m in length and 2m in height. The item 1 is suspended on an overhead conveyor 9 that moves the item 1 between the walls and along the length of the walls 8 through the heating oven 4. The melting zone 5 is defined by an initial length of the walls 8 beginning from an end of the heating oven 4 through which the item 1 first enters the heating oven 4. The curing zone 6 is defined by a subsequent length of the walls 8 beginning from the end of the melting zone 5.

In some embodiments, the walls 8 can be moved towards or away from each other to adjust the distance between the opposing faces of the walls 8. This allows adjustment of the heating energy that impacts the surface 3, and therefore, the adjustment of the resulting surface temperature of the surface 3, so that the desired surface temperatures can be achieved in different environmental conditions.

It is preferred that the item 1 has a relative humidity of between about 5% to about 7% before the powder 2 is applied to the surface of the item 1. In this regard, in a preferred embodiment of the method of the present invention, the item 1 is also preheated such that the item has a relative humidity of between about 5% to about 7%.

In one embodiment, the item 1 is preheated to a temperature of between about 60°C and about 120°C for about 90 seconds. Typically, the item 1 has a relative humidity of between about 6% and about 8% before preheating. Also typically, the item 1 has a temperature of about 25°C before preheating. The preheating is such that the item has a temperature of between about 40°C and about 55°C before the powder 2 is applied to the surface 3 of the item 1.

Many applications require the entire outer surface of the item 1 to be powder coated. Thus, in many embodiments of the present invention, the surface 3 is the entire outer surface of the item 1.

Embodiments of the present invention are well suited to items 1 that are made of wood or wood-based materials. These materials are heat-sensitive and particularly prone to the problems described above of cracking, distortion, bubbling, surface unevenness, structural weakening, and other defects that detract from the quality, aesthetics, and performance of the item, when subjected to the high temperature baking required in traditional powder coating processes. These materials include engineered wood, such as fiberboard, particleboard, chipboard, medium density fiberboard (MDF), and hardboard. However, the present invention is not limited to these specific materials and can be applied to other heat-sensitive materials.

In one embodiment which has been found to perform well, the item 1 is made of medium density fiberboard and the powder forms a coating having a thickness of between about 80 micrometres and about 90 micrometres. This first coating is sanded and the method of the present invention described above is used a second time to form a second coating having a thickness of between about 60 micrometres and about 70 micrometres. With the sanding of the first coating, this results in the overall thickness of the first and second coatings being between about 100 micrometres and about 140 micrometres. In other embodiments, the second coating can also be sanded, with or without sanding the first coating.

In another embodiment which has been found to perform well, the item 1 is made of melamine faced chipboard (MFC) and the powder forms a coating having a thickness of between about 80 micrometres and about 100 micrometres. Only one coating is required in this particular embodiment, and this coating can also be sanded.

The methods provided by the present invention result in a cured powder 2 that has a hardness of at least 2H. Also, it has been found that when the methods of the present invention are applied to a plurality of heat-sensitive items, a defect rate of less than 3% can be achieved, that is, less than 3% of the plurality of heat-sensitive items have defects after the items are powder coated using the methods of the present invention. This is a vast improvement from the defect rate of 30% that is typical of prior methods of powder coating heat-sensitive items.

One particular application of the present invention is for the powder coating of an item 1 having an edge 10. One particular example is an item 1 in the form of a board having an edge 10. Typically, boards have two opposite major faces 11 with an edge 10 that is between the faces and extends around the perimeter of the faces. Boards are often flat with the two opposite major faces 11 being substantially flat. In many applications, the major faces 11 have features such as grooves, channels, holes, splines, ribs, raised or indented patterns, and attachments. Such features can also be included on the edge 10. Boards can have one or more edges 10. To simplify referencing, any reference to a "board" in this specification also refers to boards having a plurality of edges 10 and any reference to an "edge" in this specification also refers to one or more, or all, of the edges 10 of boards having a plurality of edges.

The powder coating of furniture pieces is becoming more and more popular. Thus, it is envisaged that popular applications of the present invention will be those where items, such as the boards described above, are assembled to form furniture pieces. Where boards such as those described above are used in these applications, the features noted above that are located on the major faces 11 and the edge 10 are used to facilitate attachment of one board to one or more other boards in order to allow assembly of the boards to form furniture pieces. It was noted above that the methods provided by the present invention result in a cured powder 2 that has a hardness of at least 2H. This is particularly desirable for the furniture pieces described above.

With boards, and other items having an edge, one particular problem is water or moisture loss through an edge of the board. This can lead to defects such as edge cracking and bubbling. In view of this, the present invention also provides a method of powder coating a heat-sensitive item having an edge which includes sealing the edge against moisture loss from the item through the edge before applying powder to the item. Thus, the sealing of the edge also occurs before curing the powder. The method of powder coating the item that is performed after sealing the edge against moisture loss from the item can be any suitable method of powder coating, and can be, but is not limited to, the method of powder coating a heat-sensitive item described above in the present specification.

Thus, in a preferred embodiment of the method of powder coating a heat-sensitive item having an edge, in which the edge is sealed against moisture loss from the item before applying powder to the item, the item is the heat-sensitive item 1 described above, having the major faces 11 and the edge 10.

Preferably, the edge 10 is sealed by applying an edge strip 12 to the edge. The edge strip (or "edge-sealing strip") 12 can be bonded to the edge 10. For example, the edge strip can be bonded to the edge 10 by gluing the edge strip 12 with a glue 13 to the edge. Any suitable glue can be used to glue the edge strip to the edge 10. A preferred glue is a hotmelt adhesive. Even more preferred is a hotmelt adhesive that reacts with moisture to increase the bond strength between the board and the edge strip. One specific example of this type of moisture reactive hotmelt adhesive is Kleiberit PUR hotmelt adhesive supplied by KLEBCHEMIE GmbH & Co. KG.

In one embodiment, the edge strip and the glue are heated after gluing the edge strip to the edge 10. More particularly, in one embodiment, the edge strip and the glue are heated at a temperature between about 80°C and about 220°C. Heating ensures that the glue seals and solidifies appropriately. In particular, heating accelerates curing and attachment of the glue between the edge strip and the edge 10, which reduces processing time. The edge strip can be made of any suitable material, such as one or more of paper, melamine paper, and kraft paper.

In another embodiment, where a moisture reactive hotmelt adhesive 13 is used, the edge strip 12 is simply glued to the edge 10 using the moisture reactive holtmelt adhesive. Powder 2 is then applied to the board 1 which is then simply heated to cure the powder as described in detail above. The moisture reactive hotmelt adhesive simply cures in ambient air once it is applied to the board. More particularly, the moisture reactive hotmelt adhesive reacts with moisture in the air to increase the bond strength between the edge strip 12 and the board 1. The moisture reactive hotmelt adhesive 13 can also draw moisture from the board itself thereby reacting with the moisture to increase bond strength. In either case, the edge 10 is sealed against moisture loss from the board, thereby minimizing defects such as edge cracking and bubbling.

In a further embodiment, heating can also be applied after gluing the edge strip 12 to the edge 10 with the moisture reactive hotmelt adhesive 13 in order to assist in curing the moisture reactive hotmelt adhesive. This heating can be from a separate heating source before or after the powder is applied. After the powder is applied, the heating can also be from the heating source subsequently used to heat the powder to cure the powder, such as the heating oven 4 described above.

It has been found that an edge strip having a thickness of between about 0.03mm and about 5mm is preferable. Even more preferable is an edge strip thickness of 0.03mm to 3mm. Most preferable is an edge strip thickness of 0.03mm to 1mm. The edge strip is matched to the board. For example, for an item 1 in the form of a board having a length of 600mm, a width of 400mm, and an edge thickness of 18mm, the required length of the edge strip is 2m.

The edge strip can be attached to the edge 10 either manually or with the aid of machinery, and can be attached to items of various shapes, such as rectangular and round boards. In one embodiment, the edge strip 12 and the glue 13 are applied simultaneously by a machine applicator. The machine applicator can include a roll of edge strip 12. A leading end of the roll of edge strip 12 and the glue are applied to the edge 10 and the roll of edge strip 12 is then unrolled along the edge with the glue continuously applied as the edge strip is unrolled, thereby attaching the edge strip 12 along a continuous length of the edge 10. The glue is heated or simply cures in ambient air without heating to securely attach the edge strip to the edge. The corners of the board can then be polished. After a quality inspection, the powder 2 is then applied to the item 1 and cured.

As well as ameliorating defects such as edge cracking and bubbling due to moisture loss from the board, the use of the edge strip has also been found to assist in the leveling of the edge 10, which reduces processing time. For example, this can reduce the time required for any polishing required.

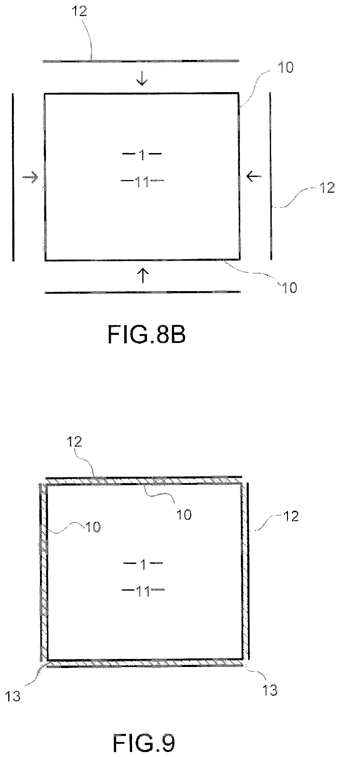

The present invention also provides a heat-sensitive item to be powder coated, the heat-sensitive item having an edge sealed against moisture loss from the item through the edge, as best shown in Fig. 9. In a preferred embodiment, the item is the item 1 described above having the edge 10.

The edge 10 has the edge strip 12. The edge strip 12 is bonded to the edge 10. In particular, the edge strip is bonded to the edge with the glue 13. The edge strip 12 and the glue 13 were blanched. More particularly, the edge strip 12 and the glue 13 were blanched at a temperature between about 80°C and about 220°C.

The glue 13 is a hotmelt adhesive. More particularly, the glue 13 is a hotmelt adhesive that reacts with moisture to increase the bond strength between the item and the edge strip. As above, one specific example of this type of moisture reactive hotmelt adhesive is Kleiberit PUR hotmelt adhesive supplied by KLEBCHEMIE GmbH & Co. KG.

The edge strip 12 is made of one or more of paper, melamine paper, and kraft paper.

In one particular embodiment, the heat-sensitive item 1 is a synthetic board comprising a main board. The main board is covered by edge strips 12 on side surfaces (edges) thereof, and the edge strips and other outer surfaces of the main board are all covered by a coating formed through powder coating (or "powder spraying").

The edge strips 12 are adhered to the edges of the main board through an adhesive or glue 13.

The adhesive may be a hydrophobic adhesive that is able to withstand a high temperature or a glue that is able to withstand a high temperature.

When the adhesive is a glue that is able to withstand a high temperature, the edge strips 12 are adhered to the edges of the main board through a hot stamping process so that a location at which the edge strips are adhered to the edges of the main board has a temperature of 120 degrees to 220 degrees to expel the moisture from the glue.

In one embodiment, the glue is a yellow adhesive whose main ingredient is a PVAC waterbase adhesive, or the glue is a T50 adhesive whose main ingredient is a PVAC waterbase adhesive.

In another embodiment, the glue is a hotmelt adhesive. Preferably, the glue 13 is a hotmelt adhesive that reacts with moisture to increase the bond strength between the item 1 and the edge strip 12. As above, one specific example of this type of moisture reactive hotmelt adhesive is Kleiberit PUR hotmelt adhesive supplied by KLEBCHEMIE GmbH & Co. KG.

Shapes of the edge strips match with those of the edges of the main board.

The edge strips are made of a paper material that has a hardness and smooth surfaces, and the paper material has a density of 30 g/m² ∼ 300 g/m². The edge strips are existing products, and edge strips having a suitable size that are commercially available can be selected on the market according to the size of the synthetic board. Preferably, the edge strips are made of melamine paper or kraft paper.

The edge-sealing strips have a thickness of 0.03 mm ∼ 3 mm, and preferably have a thickness of 0.03 mm ∼ 1 mm.

The main board may be one of a plywood, a shaving board and a medium density fiberboard (MDF). Faces of the main board may have a square shape, a polygonal shape, a circular shape or some other irregular shape.

### Example 1:

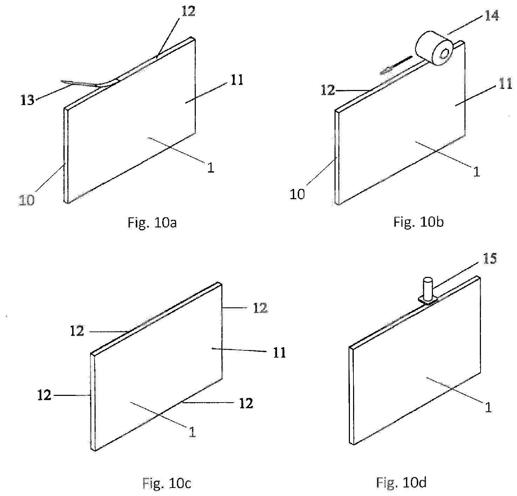

As shown in Fig. 10, in this example, the main board is an MDF main board 1, and the edge strips are kraft paper strips 12. The MDF main board 1 is a square board, the edge strips 12 are in a strip form, and four edges 10 of the main board are covered by one edge strip respectively. Shapes of the edge strips match with those of the four edges 10 of the main board 1 respectively. The edge strips 12 and an upper surface 11 and a lower surface 11 of the main board are all covered by a coating formed through a powder coating or spraying process.

In this example, the synthetic board 1 is manufactured in a process as follows:
(1) Cutting: an MDF to be processed is cut into multiple small MDF main boards 1 (as shown in Fig. 10a) which have rectangular faces. The small MDF main boards 1 that are cut have a size of 600 mm×400 mm×18 mm.
(2) Selecting edge strips 12 having a suitable size and adhering one of the edge strips to four edges 10 of the MDF main boards 1 respectively: in this example, the edge strips are kraft paper strips 12. The kraft paper strips 12 have a width and a length that are slightly larger than those of the edges 10 of the MDF main boards 1. Specifically, according to the specification of the MDF main boards 1 in this example, the kraft paper strips 12 that are adopted have two specifications, i.e., 605 mm×20 mm×1 mm and 405 mm×20 mm×1 mm.
   (a) Applying an adhesive for bonding purpose: as shown in Fig. 10a, the adhesive 13 is uniformly applied onto each of the kraft paper strips 12 having a specification of 605 mm×20 mm×1 mm, and the adhesive 13 is a glue that is able to withstand a high temperature. In this example, the glue 13 is a yellow adhesive. The yellow adhesive is an existing product whose main ingredient is a PVAC waterbase adhesive, and is commercially available on the market. A surface of the kraft paper strip 12 that is applied with the yellow adhesive is fully covered on a side surface of one of the MDF main boards 1 that has a larger length so that the side surface of the MDF main board 1 is completely covered by the kraft paper strip 12.
   (b) Hot rolling process: as shown in Fig. 10b, a hot rolling machine 14 is placed on the edge 10 of the MDF main board 1 that is covered by the kraft paper strip 12. The hot rolling machine 14 comprises a heat conductor and a heat pipe disposed in the heat conductor. The heat conductor has a cylinder form, which is convenient for the heat conductor to roll on the kraft paper strip 12. The heat pipe in the heat conductor is energized so that the heat conductor covered around the heat pipe has a temperature of 120 degrees to 220 degrees, and the hot rolling machine 14 is moved from an end to the other end of the MDF main board 1 in a lengthwise direction of the kraft paper strip 12 until the moisture is expelled from the yellow adhesive 13. This can accelerate curing of the yellow adhesive 13 so as to securely adhere the kraft paper strip 12 to the edge 10 of the MDF main board 1.
   (c) The aforesaid steps are repeated until the corresponding kraft paper strips 12 are adhered to the other three edges 10 of the MDF main board 1 (as shown in Fig. 10c) respectively.
   (d) Edge trimming process: as shown in Fig. 10d, after the yellow adhesive 13 on the kraft paper strip 12 at the location at which the kraft paper strip 12 is adhered to the edge becomes completely dry, the MDF main board 1 to be trimmed is placed on an edge trimmer 15. The edge trimmer 15 is used to cut out redundant portions of the kraft paper strip 12 that go beyond the side surface of the MDF main board 1 so that the kraft paper strip 12 exactly covers the side surface of the MDF main board 1, and then trim the kraft paper strip 12 to be smooth. The edge trimmer 15 is an existing product, and is formed by installing a trimming knife on an existing milling machine.

   Quality inspection is carried out on the MDF main board 1 after the above steps are completed.
   In a preferred variation to this example, a moisture reactive hotmelt adhesive is used instead of the yellow adhesive described above. One specific example of this type of moisture reactive hotmelt adhesive is Kleiberit PUR hotmelt adhesive supplied by KLEBCHEMIE GmbH & Co. KG. When this moisture reactive hotmelt adhesive is used, step "(b) Hot rolling process" is not necessary. Instead, the moisture reactive hotmelt adhesive simply cures in ambient air to securely adhere the kraft paper strip 12 to the edge 10 of the MDF main board 1.
(3) Powder spraying and baking: powder spraying is carried out on the upper surface, the lower surface and the four edges 10 of the prepared MDF main board 1. A paint used in the spraying process is a powder paint 2 curable at a low temperature whose main ingredient is an epoxy resin and a polyester.

After the powder spraying process is completed, the MDF main board 1 is delivered to a high-temperature furnace to be baked therein at a high temperature. Firstly, the high-temperature furnace is heated up to a temperature of 180 degrees within 90 seconds so as to fuse the powder 2 sprayed on the surfaces of the MDF main board 1. Then, the high-temperature furnace is cooled to a temperature of 140 degrees within 30 seconds so as to cure the powder on the surfaces of the MDF main board 1, and this temperature is preserved for 3 minutes.

After the baking process of the MDF main board 1 is completed, a finished MDF is formed and is then transferred to a warehouse.

In accordance with the above, the main board is covered by edge strips on edges thereof so that the moisture inside the board can be locked rather than being evaporated at a high temperature. Therefore, cracking of the synthetic board due to water loss from the perimeter of the synthetic board when being baked in a high-temperature furnace after the powder spraying process is completed can be prevented or minimized, thereby delivering a good coating effect. Therefore, the synthetic board of the present invention has a smooth and aesthetic appearance, and all the side surfaces of the board are smooth without cracks, or with minimal cracks, and have the same smoothness as the upper surface and the lower surface of the board.

In the aforesaid example, the synthetic board 1 is cut to have rectangular faces. Here, it shall be appreciated that the present invention provides other embodiments where the face shape of the synthetic board is not merely limited to the rectangular form, but may also be any other form.

It shall also be appreciated that embodiments of the present invention are not merely limited to the manufacturing methods in the embodiments and examples described above, and other manufacturing methods are also possible as long as the structural requirements are satisfied.

It can be appreciated that the aforesaid embodiments are only exemplary embodiments adopted to describe the principles of the present invention, and the present invention is not merely limited thereto. The invention is limited by the scope of the claims.

## Claims

1. A method of powder coating a heat-sensitive item (1) having an edge (10), the method including:
sealing the edge (10) against moisture loss from the item (1);
applying powder to a surface (3) of the item (1);
heating the surface (3) in a melting stage for between about 60 seconds and about 90 seconds such that the surface (3) has a surface temperature that reaches a maximum that is above a curing temperature to melt the powder; and
heating the surface (3) in a curing stage to maintain the surface temperature at the curing temperature for between about 120 seconds and about 180 seconds to cure the powder.

2. A method according to claim 1 wherein the edge (10) is sealed by applying an edge strip (12) to the edge.

3. A method according to claim 2 wherein the edge strip (12) is bonded to the edge (10).

4. A method according to claim 3 wherein the edge strip (12) is bonded to the edge (10) by gluing the edge strip to the edge.

5. A method according to claim 4 wherein the edge strip (12) and glue (13) are heated after gluing the edge strip to the edge (10).

6. A method according to claim 5 wherein the edge strip (12) and the glue (13) are heated at a temperature between about 80°C and about 220°C.

7. A method according to any one of claims 4 to 6 wherein the glue (13) is a hotmelt adhesive.

8. A method according to any one of claims 4 to 7 wherein the glue (13) is a hotmelt adhesive that reacts with moisture to increase the bond strength between the item (1) and the edge strip (10).

9. A method according to any one of claims 2 to 8 wherein the edge strip (12) is made of one or more of paper, melamine paper, and kraft paper.

10. A method according to any one of claims 1 to 9 wherein the item (1) is heated by moving the item through a heating oven (4) having a melting zone (5) corresponding to the melting stage and a curing zone (6) corresponding to the curing stage.

11. A method according to any one of claims 1 to 10 wherein the cured powder has a hardness of at least 2H.

12. A method according to any one of claims 1 to 11 wherein the item (1) comprises a board is made of wood or wood-based material.

## Patentansprüche

1. Verfahren für Pulverbeschichten eines wärmeempfindlichen Elements (1) mit einer Kante (10), wobei das Verfahren einschließt:
Versiegeln der Kante (10) gegen Feuchtigkeitsverlust von dem Element (1);
Aufbringen von Pulver auf eine Oberfläche (3) des Elements (1);
Erhitzen der Oberfläche (3) in einer Schmelzstufe für etwa 60 bis 90 Sekunden, sodass die Oberfläche (3) eine Oberflächentemperatur aufweist, die ein Maximum erreicht, das über einer Aushärttemperatur liegt, um das Pulver zu schmelzen; und
Erhitzen der Oberfläche (3) in einer Aushärtstufe, um die Oberflächentemperatur für etwa
120 bis 180 Sekunden auf der Aushärttemperatur zu halten, um das Pulver auszuhärten.

2. Verfahren nach Anspruch 1, wobei die Kante (10) durch Aufbringen eines Kantenstreifens (12) auf die Kante versiegelt wird.

3. Verfahren nach Anspruch 2, wobei der Kantenstreifen (12) an die Kante (10) gebondet wird.

4. Verfahren nach Anspruch 3, wobei der Kantenstreifen (12) durch Kleben des Kantenstreifens auf die Kante (10) an die Kante gebondet wird.

5. Verfahren nach Anspruch 4, wobei der Kantenstreifen (12) und der Klebstoff (13) nach dem Kleben des Kantenstreifens auf die Kante (10) erhitzt werden.

6. Verfahren nach Anspruch 5, wobei der Kantenstreifen (12) und der Klebstoff (13) auf eine Temperatur zwischen etwa 80 °C und etwa 220 °C erhitzt werden.

7. Verfahren nach einem der Ansprüche 4 bis 6, wobei der Klebstoff (13) ein Schmelzkleber ist.

8. Verfahren nach einem der Ansprüche 4 bis 7, wobei der Klebstoff (13) ein Schmelzkleber ist, der mit Feuchtigkeit reagiert, um die Verbindungsstärke zwischen dem Element (1) und dem Kantenstreifen (10) zu erhöhen.

9. Verfahren nach einem der Ansprüche 2 bis 8, wobei der Kantenstreifen (12) aus einem oder mehreren von Papier, Melaminpapier und Kraftpapier hergestellt ist.

10. Verfahren nach einem der Ansprüche 1 bis 9, wobei das Element (1) erhitzt wird, in dem das Element durch einen Heizofen (4) mit einer Schmelzzone (5), die der Schmelzstufe entspricht, und einer Aushärtzone (6), die der Aushärtstufe entspricht, bewegt wird.

11. Verfahren nach einem der Ansprüche 1 bis 10, wobei das ausgehärtete Pulver eine Härte von mindestens 2H aufweist.

12. Verfahren nach einem der Ansprüche 1 bis 11, wobei das Element (1) eine Platte umfasst, die aus Holz oder holzbasiertem Material hergestellt ist.

## Revendications

1. Procédé de revêtement en poudre d'un élément sensible à la chaleur (1) comportant un bord (10), le procédé comprenant :
l'étanchéification du bord (10) contre la perte d'humidité de l'élément (1) ;
l'application de poudre à une surface (3) de l'élément (1) ;
le chauffage de la surface (3) au cours d'une étape de fusion pendant 60 à 90 secondes environ de manière à ce que la surface (3) soit à une température superficielle qui atteint une valeur maximum supérieure à une température de durcissement pour faire fondre la poudre ; et
le chauffage de la surface (3) au cours d'une étape de durcissement pour maintenir la température superficielle à la température de durcissement pendant 120 à 180 secondes environ afin de durcir la poudre.

2. Procédé selon la revendication 1 dans lequel le bord (10) est étanchéifié en appliquant une bande de bordure (12) au bord.

3. Procédé selon la revendication 2 dans lequel la bande de bordure (12) est collée au bord (10).

4. Procédé selon la revendication 3 dans lequel la bande de bordure (12) est collée au bord (10) en collant la bande de bordure au bord.

5. Procédé selon la revendication 4 dans lequel la bande de bordure (12) et la colle (13) sont chauffées après le collage de la bande de bordure au bord (10).

6. Procédé selon la revendication 5 dans lequel la bande de bordure (12) et la colle (13) sont chauffées à une température de 80 °C à 220 °C environ.

7. Procédé selon l'une quelconque des revendications 4 à 6 dans lequel la colle (13) est un adhésif thermofusible.

8. Procédé selon l'une quelconque des revendications 4 à 7 dans lequel la colle (13) est un adhésif thermofusible qui réagit à l'humidité pour augmenter la force d'adhérence entre l'élément (1) et la bande de bordure (10).

9. Procédé selon l'une quelconque des revendications 2 à 8 dans lequel la bande de bordure (12) est constituée d'une ou plusieurs couches de papier, de papier mélaminé et de papier kraft.

10. Procédé selon l'une quelconque des revendications 1 à 9 dans lequel l'élément (1) est chauffé en déplaçant l'élément à travers un four de chauffage (4) doté d'une zone de fusion (5) correspondant à l'étape de fusion et une zone de durcissement (6) correspondant à l'étape de durcissement.

11. Procédé selon l'une quelconque des revendications 1 à 10 dans lequel la poudre durcie présente une dureté d'au moins 2H.

12. Procédé selon l'une quelconque des revendications 1 à 11 dans lequel l'élément (1) comprend un panneau en bois ou en matériau à base de bois.
